# EUROPEAN PATENT SPECIFICATION

(11) **EP 4 532 584 B1**
(45) Date of publication and mention of the grant of the patent: **25.03.2026**
(21) Application number: 23729730.4
(22) Date of filing: 30.05.2023
(51) Int. Cl.: C08G 65/00, C08G 65/333, C08G 65/334, C08G 65/336, C09D 171/00

(54) **NOVEL (PER)FLUOROPOLYETHER POLYMERS AND USE THEREOF**
NEUARTIGE (PER)FLUORPOLYETHERPOLYMERE UND VERWENDUNG DAVON
NOUVEAUX POLYMÈRES (PER)FLUOROPOLYÉTHER ET LEUR UTILISATION

(30) Priority: 31.05.2022 EP 22176290
(43) Date of publication of application: 09.04.2025
(73) Proprietor: Syensqo Specialty Polymers Italy S.p.A., 20021 Bollate (MI) (IT)
(72) Inventor: FONTANA, Simonetta, Antonella, 20021 Bollate (IT); THOMSON, Mary, 20021 Bollate (IT); BARBIERI, Solange, 20021 Bollate (IT)
(74) Representative: Marturano, Pasqualino
(86) International application number: PCT/EP2023/064365
(87) International publication number: WO 2023/232761

(56) References cited:
- WO-A1-2022/078766
- US-A1- 2018 244 844
- US-A1- 2018 371 258
- US-A1- 2020 010 619
- US-B2- 9 815 799

## Description

### Reference to related applications

This application claims priority from European patent application EP22176290.9 filed on May 31, 2022.

### Technical field

The present invention relates to novel (per)fluoropolyether (PFPE) polymers, endowed with enhanced UV stability, to a process for their manufacture and to their use as additives in coating compositions.

### Background Art

The use of (per)fluoropolyether (PFPE) polymers as ingredients in the manufacture of anti-soil coating compositions, for coating different types of substrates is known in the art. For example, EP 3312242 (3M Innovative Properties Company) discloses protective coating compositions with mixed functionalities, wherein PFPE are mentioned among other backbones; WO 2016/079195 (Solvay Specialty polymers Italy S.p.A.) discloses zwitterionic derivatives of PFPE, which are disclosed as suitable for coating applications; WO 2019/106366 (Sphere Fluidic Limited) discloses surfactants comprising perfluoropolyether structure.

Coatings based on (per)fluoropolyether (PFPE) polymers have been disclosed in the art, such as for example in US 5,623,037 and US 6,071,564 (both in the name of Ausimont S.p.A.).

When a substrate is treated by a perfluoropolyether-containing silane compound, a membrane layer, which has hydrophobicity, oleophobicity, anti-fouling, low coefficient of friction and durability, can be formed on the surface thereof. Reference is made for example to US 2020/407378 (Guangzhou UR Materials Technology Co., Ltd).

PFPE polymers containing alkoxy-silane groups and an aliphatic cyclic moiety comprising at least one nitrogen atom have been disclosed for example in US 2018/0244844 (in the name of Daikin Industries, Ltd.).

CN 109642000 (in the name of Nissan Chemical Industries, Ltd.) discloses a composition comprising a PFPE polymer having at both its chain ends an unsaturated moiety. WO 2022/078766 A1 discloses a composition including a (per)fluoropolyether polymer comprising a (per)fluoropolyoxyalkylene chain having two chain ends bonded to opposite sides of said chain, wherein one of said chain ends comprises at least one group selected from the group consisting of: alkoxysilane, unsaturated moiety and epoxide; and the other chain end comprises at least one group comprising a quaternary ammonium salt group.

### Summary of invention

Many different substrates that are used nowadays for example in the automotive field require anti-smudge coatings, which should meet certain requirements, notably with respect to clarity (transparency), durability and oil- and water-repellency, as well as UV resistance.

The Applicant perceived that despite the efforts made in the art, there is still the need for additives capable of increasing the UV resistance of coating compositions, wherein said additives do not negatively affect the anti-smudge properties, as well as transparency, durability and oil- and water-repellency of the coatings, for use in several substrates.

Facing the above technical problem, the Applicant found that (per)fluoropolyether polymers bearing two different functional groups at their chain ends can be advantageously used as additives to enhance the UV-stability of coatings.

Thus, in a first aspect the present invention relates to a (per)fluoropolyether polymer [polymer (P_{P})] comprising a (per)fluoropolyoxyalkylene chain [chain (R_{pf})] having two chain ends bonded to opposite sides of said chain (R_{pf}),
wherein
* one of said chain ends comprises at least one, preferably from 1 to 3, group (group [I]) selected from: alkoxysilane [group (Si)] or cross-linkable group, preferably selected from unsaturated moiety [group (U)] and epoxide [group (E)];
   and
* the other chain end comprises at least one, preferably from 1 to 3, group (group [II]) selected from one of the following: optionally substituted piperidine, optionally substituted pyridine or optionally substituted pyrrole.

Advantageously, the presence of different groups at the two chain ends of the (per)fluoropolyoxyalkylene chain (R_{pf}) provides for an "asymmetric PFPE polymer" that can be used as additive capable of providing outstanding UV resistance with a good durability over time.

Also advantageously, polymer (P_{P}) according to the present invention is manufactured via a process that allows the fine tuning of the amount of groups [I] and [II], which allows to properly select the amount of desired functional groups [I] or [II] depending on the final composition in which the polymer (P_{P}) is intended to be used.

While polymer (P_{P}) as defined above is particularly preferred, the present invention also encompasses compositions comprising polymer (P_{P}) as defined above, and at least one other polymer having at its chain ends either two groups [I] or two groups [II].

Such compositions are also useful to provide good UV resistance over time, when added as an additive in a coating composition, without negatively addicting the water- and oil-repellency, easy to clean and stain removal properties of the initial composition.

### Detailed description of the invention

For the purpose of the present description and of the following claims:
- the use of parentheses around symbols or numbers identifying the formulae, for example in expressions like "polymer (P_{P})", etc., has the mere purpose of better distinguishing the symbol or number from the rest of the text and, hence, said parenthesis can also be omitted;
- the acronym "PFPE" stands for "(per)fluoropolyether" and, when used as substantive, is intended to mean either the singular or the plural form, depending on the context;
- the term "(per)fluoropolyether" is intended to indicate fully or partially fluorinated polyether;
- the terms "clear" and "transparent" are used as synonyms.

Polymer (P_{P}) of the present invention comprises a (per)fluoropolyoxyalkylene chain [chain (R_{pf})] having two chain ends bonded to opposite sides of said chain (R_{pf}),
wherein
* one of said chain ends comprises at least one group (group [I]) selected from and alkoxysilane [group (Si)] or a cross-linkable group, which is preferably selected from an unsaturated moiety [group (U)] or an epoxide [group (E)];
   and
* the other chain end comprises at least one group (group [II]) selected from one of the following: optionally substituted piperidine, optionally substituted pyridine or optionally substituted pyrrole.

For the avoidance of doubt, the expression "selected from one of the following: optionally substituted piperidine, optionally substituted pyridine or optionally substituted pyrrole." is used to indicate that group (II) is derived from any one of the optionally substituted compounds in the list. Group (II) is bound to [chain (R_{pf})].

Polymer (P_{P}) may comprise one, two or three group (I) at one chain end and one, two or three group (II) at the other chain end.

In polymer (P_{P}) according to the present invention, chain (R_{pf}) is preferably a chain of formula

-D'-(CFX')_{z1}O(R_{f})(CFX)_{z2}-D-

wherein
z1 and z2, equal or different from each other, are equal to or higher than 1, preferably from 1 to 10, more preferably from 1 to 3;
X and X', equal or different from each other, are -F or -CF₃, provided that when z1 and/or z2 are higher than 1, X and X' are -F;
D and D', equal or different from each other, are a sigma bond or a hydrogenated alkylene chain comprising from 1 to 6 and even more preferably from 1 to 3 carbon atoms, said alkyl chain being optionally substituted with at least one perfluoroalkyl group comprising from 1 to 3 carbon atoms;
(R_{f}) comprises, preferably consists of, repeating units R°, said repeating units being independently selected from the group consisting of:
   (i) -CFXO-, wherein X is F or CF₃;
   (ii) -CFXCFXO-, wherein X, equal or different at each occurrence, is F or CF₃, with the proviso that at least one of X is -F;
   (iii) -CF₂CF₂CW₂O-, wherein each of W, equal or different from each other, are F, Cl, H;
   (iv) -CF₂CF₂CF₂CF₂O-;
   (v) -(CF₂)ⱼ-CFZ-O- wherein j is an integer from 0 to 3 and Z is a group of general formula -O-R_{(f-a)}-T, wherein R_{(f-a)} is a fluoropolyoxyalkene chain comprising a number of repeating units from 0 to 10, said recurring units being chosen among the following : -CFXO- , -CF₂CFXO-, -CF₂CF₂CF₂O-, -CF₂CF₂CF₂CF₂O-, with each of X being independently F or CF₃; and T being a C₁-C₃ perfluoroalkyl group.

More preferably, each of D' and D is a sigma bond or -CH₂-.

Preferably, said chain (R_{f}) complies with the following formula:

(R_{f}-I) -[(CFX¹O)_{g1}(CFX²CFX³O)_{g2}(CF₂CF₂CF₂O)_{g3}(CF₂CF₂CF₂CF₂O)_{g4}]-

wherein
- X¹ is independently selected from -F and -CF₃,
- X², X³, equal or different from each other and at each occurrence, are independently -F, -CF₃, with the proviso that at least one of X is -F;
- g1, g2 , g3, and g4, equal or different from each other, are independently integers ≥0, such that g1+g2+g3+g4 is in the range from 2 to 300, preferably from 2 to 100; should at least two of g1, g2, g3 and g4 be different from zero, the different recurring units are generally statistically distributed along the chain.

More preferably, chain (R_{f}) is selected from chains of formula:

(R_{f}-IIA) -[(CF₂CF₂O)ₐ₁(CF₂O)ₐ₂]-

wherein:
- a1 and a2 are independently integers ≥ 0 such that the number average molecular weight is between 400 and 10,000, preferably between 1,000and 6,000; both a1 and a2 are preferably different from zero, with the ratio a1/a2 being preferably comprised between 0.1 and 10;

   (R_{f}-IIB) -[(CF₂CF₂O)_{b1}(CF₂O)_{b2}(CF(CF₃)O)_{b3}(CF₂CF(CF₃)O)_{b4}]-

   wherein:
   b1, b2, b3, b4, are independently integers ≥ 0 such that the number average molecular weight is between 400 and 10,000, preferably between 1,000and 6,000; preferably b1 is 0, b2, b3, b4 are > 0, with the ratio b4/(b2+b3) being ≥1;

      (R_{f}-IIC) -[(CF₂CF₂O)_{c1}(CF₂O)_{c2}(CF₂(CF₂)_{cw}CF₂O)_{c3}]-
   wherein:
      cw = 1 or 2;
      c1, c2, and c3 are independently integers ≥ 0 chosen so that the number average molecular weight is between 400 and 10,000, preferably between 1,000 and 6,000; preferably c1, c2 and c3 are all > 0, with the ratio c3/(c1+c2) being generally lower than 0.2;

         (R_{f}-IID) -[(CF₂CF(CF₃)O)_{d}]-
      wherein:
         d is an integer > 0 such that the number average molecular weight is between 400 and 10,000, preferably between 1,000 and 6,000;

            (R_{f}-IIE) -[(CF₂CF₂C(Hal*)₂O)ₑ₁-(CF₂CF₂CH₂O)ₑ₂-(CF₂CF₂CH(Hal*)O)ₑ₃]-
         wherein:
            - Hal*, equal or different at each occurrence, is a halogen selected from fluorine and chlorine atoms, preferably a fluorine atom;
            - e1, e2, and e3, equal to or different from each other, are independently integers ≥ 0 such that the (e1+e2+e3) sum is comprised between 2 and 300.

Still more preferably, chain (R_{f}) complies with formula (R_{f}-III) here below:

(R_{f}-III) -[(CF₂CF₂O)ₐ₁(CF₂O)ₐ₂]-

wherein:
- a1, and a2 are integers > 0 such that the number average molecular weight is between 400 and 10,000, preferably between 1,000 and 6,000, with the ratio a1/a2 being generally between 0.1 and 10, more preferably between 0.2 and 5.

As described above, polymer (P_{P}) according to the present invention is advantageously an asymmetric polymer, in other words polymer (P_{P}) comprises at one chain end at least one group [I] and at the other chain end at least one group [II], wherein group [I] and group [II] are different from each other.

Preferably, said group [I] is linked to chain (R_{pf}) via a linking group.

More preferably, said linking group complies with the following formula:

*-(Rₐ)ₜ-(R_{b})ᵥ-(R_{c})ᵤ-§

wherein:
* indicates the bond to chain (R_{pf})
§ indicates the bond to group [I];
Rₐ is a poly(oxy)alkylene chain;
t is 0 or an integer from 1 to 15, preferably from 1 to 10;
v is 0 or 1 ;
R_{b} is a group of formula:

   (R_{b}-I) -O-C(=O)-NH-(CHₕ)ₑ-

   (R_{b}-II) -C(=O)-NR'-(CHₕ)_{f}-

   (R_{b}-III) -O-(CH₂)_{g}-C(=O)-
wherein
e is an integer from 1 to 6,
R' is H or a linear or branched alkyl group having from 1 to 6 carbon atoms,
f is an integer from 1 to 4,
g is an integer from 1 to 4, and
each h is independently 0 or an integer equal to 1 or 2, with the proviso that when h is 0, e and f, each independently, are 1;
R_{c} is a linear or branched alkyl chain having from 1 to 12 carbon atoms, optionally comprising one or more oxygen atoms, or an optionally substituted aliphatic cycloalkyl comprising 5 or 6 members; and
u is 0 or 1 .

As described above, from 1 to 3 groups [I] can be present at one of the chain ends of chain (R_{pf}). It will be understood that the presence of 1, 2 or 3 groups [I] depends on the valence of group R_{b} or R_{c}.

For example, when (R_{b}) complies with formulae (R_{b}-I) or (R_{b}-II) as described above:
when h is equal to 2, then the carbon atom bears two hydrogen atoms and one group [I]
when h is equal to 1, then the carbon atom bears one hydrogen atom and two groups [I] and
when h is equal to 0, then the carbon atom bears three groups [I].

Preferably, (Rₐ) is a poly(oxy)alkylene chain comprising from 1 to 50 fluorine-free oxyalkylene units. More preferably said units, being the same or different from each other, comply with formula:

-OCH(J)CH(J*)-

wherein each of J and J* is independently selected from hydrogen atom, straight or branched alkyl or aryl, preferably hydrogen atom, methyl, ethyl or phenyl.

More preferably, -(Rₐ)ₜ- complies with one of the following formulae (Rₐ-I) to (Rₐ-III):

(Rₐ-I) -(OCH₂CH₂)ₜ₁-

(Rₐ-II) -[OCH(CH₃)CH₂]ₜ₂-

(Rₐ-III) -[(OCH₂CH₂)ₜ₃-(OCH(CH₃)CH₂)ₜ₄]ₜₓ-

wherein
t1 and t2, each independently, are an integer from 1 to 15, preferably from 1 to 10; and
t3, t4 and tx are integers higher than 1, such that the sum of t3 and t4 is from 2 to 15, more preferably from 2 to 10.

Preferably, group [I] is group (U).

More preferably, group (U) is selected in the group consisting of:

(U-I) -O-C(=O)-CR_{H}=CH₂

(U-II) -O-C(=O)-NH-CO-CR_{H}=CH₂

(U-III) -O-C(=O)-R^{A}-CR_{H}=CH₂

wherein
R_{H} is H or a C₁-C₆ alkyl group;
R^{A} is selected from the group consisting of (R^{A}-I) and (R^{A}-II): 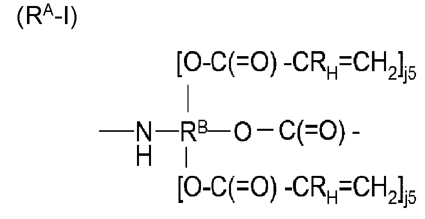
wherein
each of j5 is independently 0 or 1 and
R^{B} is a divalent, trivalent or tetravalent group selected from the group consisting of C₁-C₁₀ aliphatic group; C₃-C₁₂ cycloaliphatic group; C₅-C₁₄ aromatic or alkylaromatic group, optionally comprising at least one heteroatom selected from N, O and S; 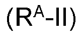 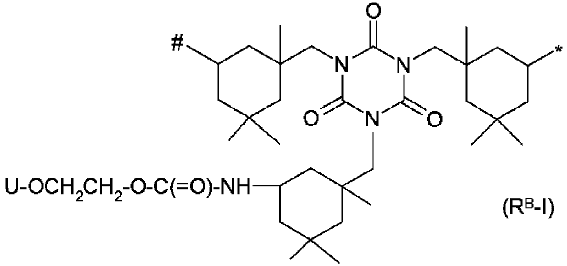 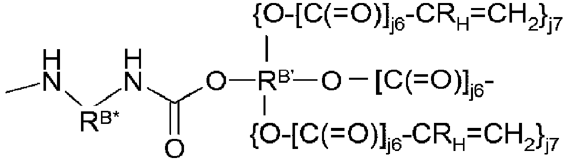
wherein
j6 is 0 or 1;
each of j7 is independently 0 or 1;
R^{B'} is a divalent, trivalent or tetravalent group selected from the group consisting of C₁-C₁₀ aliphatic group; C₃-C₁₂ cycloaliphatic group; C₅-C₁₄ aromatic or alkylaromatic group, optionally comprising at least one heteroatom selected from N, O and S; and
R^{B*} has the same meanings defined above for R^{B'} or it is a group of formula (R^{B}-I): 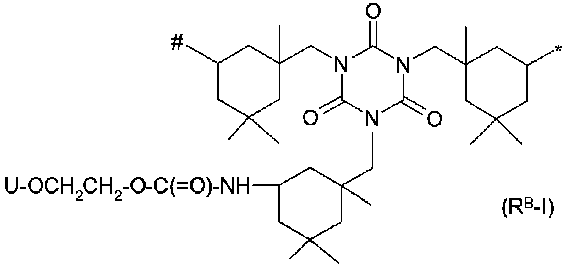
wherein
substituent U is selected from the groups (U-I) to (U-III) as defined above and
* and # indicate the bonding site to the nitrogen atoms in formula (R^{A}-II) above.

Alternatively, group [I] is group (Si).

Preferably, group (Si) complies with formula:

-Si-(OR³⁰)₃

wherein R³⁰ is a linear or branched alkyl chain having from 1 to 12 carbon atoms.

Preferably, according to this embodiment, the chain end comprises one to three groups (Si) as defined above.

Alternatively, said group [I] is group (E).

Preferably, according to this embodiment, the chain end comprises one group (E).

Preferably, group (E) is bonded to said chain (R_{pf}) via a linking group complying with the following formula:

*-(Rₐ)ₜ-(R_{q})ᵤ-§

wherein *, §, Rₐ, t, R_{c} and u are as defined above.

Preferably, group [II] is bonded to group D or D' of chain (R_{pf}) via a group of formula:

*-(Rₐ)ₜ-NH-§ or

*-(Rₐ)ₜ-O-§

wherein:
* indicates the bond to chain (R_{pf}) and § indicates the bond to group [II] and
each of Rₐ and t have the meaning given above for group [I].

According to this embodiment, each of group D and D' in chain (R_{pf}) is a hydrogenated alkylene chain comprising 1 to 6 carbon atoms.

Alternatively, group [II] is bonded to chain (R_{pf}) via a group of formula:

-(Rₐ)ₜ-(R*)ₚC(=O)NH-(R**)_{q},

or

-(Rₐ)ₜ-(R***)ᵣC(=O)O-(R****)ₛ-

wherein
p, q, r and s are each independently 0 or an integer from 1 to 6,
Rₐ and t have the meanings defined above and
each of R*, R**, R*** and R**** is independently a linear or branched alkyl chain comprising from 1 to 6 carbon atoms.

According to this embodiment, each group D and D' in chain (R_{pf}) is a sigma bond.

Preferably, group [II] is selected from, that is derived from, substituted piperidine, substituted pyridine and substituted pyrrole.

Good results have been obtained when group [II] is a derivative of 4-amino-2,2,6,6-tetramethyl-piperidine.

In a second aspect, the present invention relates to a composition [composition (C^{POL})] comprising:
- a polymer (P_{P}) as defined above;
- a (per)fluoropolyether polymer [polymer (P_{U})] comprising a (per)fluoropolyoxyalkylene chain [chain (R_{pf})] having two chain ends bonded to opposite sides of chain (R_{pf}),
   wherein both chain ends comprise a group of formula [I] as defined above; and
- a (per)fluoropolyether polymer [polymer (P_{N})] comprising a (per)fluoropolyoxyalkylene chain [chain (R_{pf})] having two chain ends bonded to opposite sides of chain (R_{pf}),
wherein both chain ends comprise a group of formula [II] as defined above.

Advantageously, composition (C^{POL}) comprises at least 25 wt.% of said polymer (P_{P}) as defined above.

Preferably, composition (C^{POL}) comprises :
- from 2.0 to 50.0 wt.% of polymer (P_{P}),
- from 0.1 to 25.0 wt.% of polymer (P_{N}) and
- from 25.0 to 95.0 wt.% of polymer (P_{U}).

Composition (C^{POL}) can further comprise a (per)fluoropolyether polymer [polymer (P^{x})] comprising a (per)fluoropolyether chain [chain (R_{pf})] having two chain ends bonded to opposite sides of chain (R_{pf}), wherein one chain end comprises a perfluoroalkyl group and the other chain end comprises either at least one group of formula [I] or of formula [II] as defined above.

When present, said polymer (P^{X}) is preferably in an amount up to 15.00 wt.% more preferably in amount from 0.01 to 12.00 wt.% and even more preferably from 0.05 to 10.00 wt.%, based on the total weight of composition (C^{POL}).

Preferably, in any of polymer (P_{U}), polymer (P_{N}) and polymer (P_{X}), each of chain (R_{pf}), group [I] and group [II] is as defined above for polymer (P_{P}).

Preferably, said polymer (P^{x}) comprises at one chain end a perfluoroalkyl group selected in the group comprising, more preferably consisting of:

-CF₃, -C₂F₅, -C₃F₇, -CF₂Cl, -CF₂CF₂Cl and -C₃F₆Cl.

Said polymer (P^{x}) comprising a perfluoroalkyl group as defined above is also referred to as "monofunctional polymer (P^{x})".

As it is known in the art, the functionality (F) of polymer P according to the present invention , i.e. the average number of functional groups per molecule of polymer, is from 1.00 to 2.00. Bifunctional polymers P typically have a functionality (F) from 1.50 to 1.99, more preferably from 1.70 to 1.98 and even more preferably from 1.85 to 1.95. The functionality (F) can be calculated for example as disclosed in EP 1810987 A (SOLVAY SOLEXIS S.P.A.).

The process for preparing polymer (P_{P}) provides for a mixture of polymers, which is herein referred to as composition (C^{POL}). If required by the circumstances, said composition (C^{POL}) can then undergo purification step(s) in order to obtain polymer (P_{P}).

Composition (C^{POL}) as defined above can be advantageously prepared starting from (per)fluoropolyether (PFPE) polymers comprising a (per)fluoropolyether chain [chain (R_{pf})] having two chain ends bonded to opposite sides of chain (R_{pf}), wherein said chain ends comprise a group of formula -OH or -C(=O)OR¹⁰ wherein R¹⁰ is H or a linear or branched alkyl chain comprising from 1 to 6 carbon atoms, preferably from 1 to 3 carbon atoms.

In a further aspect, the present invention relates to a process for the synthesis of composition (C^{POL}) as defined above.

Preferably, the process for the synthesis of composition (C^{POL}) passes through the synthesis of an intermediate composition [composition (INT)] comprising:
- a (per)fluoropolyether polymer [polymer (P^{INT})] comprising a (per)fluoropolyether chain [chain (R_{pf})] having two chain ends bonded to opposite sides of said chain (R_{pf}), wherein one of said chain ends comprises a group of formula -OH or -C(=O)OR¹⁰ wherein R¹⁰ is as defined bove and the other chain end comprises group [II] as defined above;
- a (per)fluoropolyether polymer [polymer PFPE] comprising a (per)fluoropolyether chain [chain (R_{pf})] having two chain ends bonded to opposite sides of said chain (R_{pf}), wherein both chain ends comprise a group of formula -OH or -C(=O)OR¹⁰ wherein R¹⁰ is as defined above; and
- a (per)fluoropolyether polymer [polymer (P^{II})] comprising a (per)fluoropolyether chain [chain (R_{pf})] having two chain ends bonded to opposite sides of said chain (R_{pf}), wherein both said chain ends comprise group [II] as defined above.

Composition (INT) as defined above is another aspect of the present invention.

Hence, in a further aspect, the present invention relates to a process for the synthesis of composition (INT) as defined above, comprising:
(i) providing a (per)fluoropolyether polymer [polymer PFPE] comprising a (per)fluoropolyether chain [chain (R_{pf})] having two chain ends bonded to opposite sides of said chain (R_{pf}), both said chain ends comprising a groups selected from: -C(=O)OR° or -OH;
(ii) if present, converting at least a part of said groups -OH into a leaving group for a nucleophilic substitution reaction or into a group of formula - O(R***)ᵣC(=O)O-(R^{V}) wherein R*** and r are as defined above, R^{V} is an alkyl chain comprising from 1 to 3 carbon atoms;
(iii) contacting the PFPE polymer of step (i) or the composition obtained in step (ii) with at least one compound comprising a group of formula -OH or -NH₂ and a group derived from one of the following: an optionally substituted piperidine, an optionally substituted pyridine or an optionally substituted pyrrole , thus obtaining a composition [composition (INT)] as defined above.

Composition (C^{POL}) according to the present invention can be advantageously prepared starting from composition (INT) as defined above, according to a process comprising :
(iv) providing composition (INT) as above defined and contacting said composition (INT) with at least one compound selected in the group consisting of:
   - a compound [A] bearing at least one group (U) as defined above and at least one of: halogen atom, isocyanate group, or amino group; or
   - a compound [B] bearing at least one group (E) as defined above and at least one halogen atom or at least one isocyanate group; or
   - a compound [C] bearing at least one group (Si) as defined above and at least one of: isocyanate group or amino group,
thus obtaining said composition (C^{POL}).

Furthermore and advantageously, composition (INT) as defined above can be subjected to purification according to methods known in the art in order to purify at least polymer (P^{INT}).

According to this embodiment, polymer (P^{INT}) is then contacted with at least one of compound [A], [B] or [C] as defined in step (iv) above, thus obtaining polymer (P^{P}) as a pure compound.

According to one embodiment, composition (C^{POL}) can be prepared via a one-pot synthesis, i.e. without recovering composition (INT) from the reaction mixture.

According to this embodiment, composition (C^{POL}) is prepared via a process comprising the following steps:
(i*) providing a (per)fluoropolyether polymer [polymer PFPE] comprising a (per)fluoropolyether chain [chain (R_{pf})] having two chain ends bonded to opposite sides of said chain (R_{pf}), both said chain ends comprising a group selected from: -C(=O)OR¹⁰ or -OH wherein R¹⁰ is as defined above;
(ii*) if present, converting at least a part of said -OH groups into a leaving group for a nucleophilic substitution reaction or into a group of formula - O(R***)ᵣC(=O)O-(R_{V}) wherein R*** and r are as defined above, R_{V} is an alkyl chain comprising from 1 to 3 carbon atoms;
(iii*) contacting the PFPE polymer of step (i) or the composition obtained in step (ii) with at least one compound comprising a group of formula -OH or -NH₂ and a group derived from one of the following: an optionally substituted piperidine, an optionally substituted pyridine or an optionally substituted pyrrole, and , thus obtaining composition (INT) as above defined; and
(iv*) contacting composition (INT) as obtained in step (iii) with at least one compound selected in the group consisting of :
   - a compound [A] bearing at least one group (U) as defined above and at least one of: halogen atom, isocyanate group or amino group; or
   - a compound [B] bearing at least one group (E) as defined above and at least one halogen atom or at least one isocyanate group; or
   - a compound [C] bearing at least one group (Si) as defined above and at least one of: isocyanate group or amino group,
thus obtaining composition (C^{POL}).

The polymer PFPE used as starting material in step (i) and (i*) above is preferably a PFPE polymer complying with one of the following formulae :

(PFPE-i) HO-(R_{pf})-OH

(PFPE-ii) HO-[CH(J*)CH(J)O]ₜ₁-(R_{pf})-[OCH(J)CH(J*)]ₜ₂-OH

(PFPE-iii) HO-(O=)C-(R_{pf})-C(=O)OH

wherein
(R_{pf}) is as defined above,
t1 and t2, each independently, is an integer from 1 to 50, and
J and J*, each independently, is as defined above for (Rₐ).

Good results have been obtained within the present invention when starting from polymer PFPE commercially available from Solvay Specialty Polymers Italy S.p.A. under the tradename Fomblin^{®} PFPE and Fluorolink^{®} PFPE.

Advantageously, under step (ii) or step (ii*) above, at least a part of said - OH groups in the PFPE polymer of formula (PFPE-i) or (PFPE-ii) is converted into a leaving group for a nucleophilic substitution reaction selected in the group comprising, preferably consisting of: mesyl, tosyl, perfluorobutanesulfonyl or trifluoromethylsulfonyl group.

Alternatively, under step (ii) or step (ii*) above, at least a part of said -OH groups in the PFPE polymer of formula (PFPE-i) or (PFPE-ii) is converted into a group of formula -O(R***)ᵣC(=O)O-(R^{V}) as defined above by reaction with methyl chloroacetate, methyl-3-bromo propionate, methyl-4-iodobutyrate.

Such reaction in step (ii) or step (ii*) can be properly controlled to transform a predefined amount of such -OH groups. To do so, the person skilled in the art can select the amount of reactant to provide a predetermined amount of said leaving group for a nucleophilic substitution of said group of formula -O(R***)ᵣC(=O)O-(R^{V})ₜ- as defined above. The amount of -OH groups that can be transformed is not limited and can be properly determined by the person skilled in the art depending on the desired final product. For example, within the present invention, good results were obtained by transforming about 30% of the -OH groups in the starting PFPE polymer. However, from about 1 to 100% of the -OH groups in the starting PFPE polymer can be transformed into the groups as described under step (ii) or step (ii*) above.

Preferably, said step (ii) or step (ii*) is performed in the presence of a fluorinated solvent. Said fluorinated solvent is preferably selected from the group comprising: fluorinated hydrocarbons, α,α,α,α',α',α'-hexafluoro-m-xylene, α,α,α,α',α',α'-hexafluoro-p-xylene, chloro trifluoro-toluene isomers (including 4-chlorobenzotrifluoride, 2-chlorobenzotrifluoride), α,α,α-trifluorotoluene, hexafluorobenzene and mixtures thereof.

Preferably, in step (iii) or (iii*), the compound comprising a group of formula -OH or -NH₂ and a group derived from one of the following: an optionally substituted piperidine, an optionally substituted pyridine or an optionally substituted pyrrole,is selected from 4-amino-2,2,6,6-tetramethyl piperidine, 2,2,6,6-tetramethyl-4-piperidinol, 2-(2,2,6,6-tetramethyl-piperidin-4-yl)-ethanol.

Preferably, in step (iv) or step (iv*), the reaction with said compound [A] bearing at least one group (U) and at least one isocyanate group is preferred.

Preferably, in step (iv) or step (iv*), said compound [A] complies with the following formula:

O=C=N-R²⁰-R²¹-CR_{H}=CH₂

wherein
R_{H} has the same meanings defined above for group (U);
R²⁰ is a linear or branched alkyl chain having from 1 to 6 carbon atoms, optionally substituted with a group comprising a tri-alkoxy-silyl group;
R²¹ is a divalent group of formula -O-C(=O)-, -O-C(=O)-NH-CO-, -O-C(=O)-R^{A}- wherein R^{A} is as defined above for group (U-III).

More preferably, compound [A] is selected in the group consisting of:
isocyanatoethyl methacrylate (IEM), allyl isocyanate, 3-isopropenyl-α,α-dimethylbenzyl isocyanate, vinyl isocyanate, acryloyl isocyanate, methacryloyl isocyanate, 2-isocyanatoethyl acrylate, 1,1-(bisacryloyloxy methyl) ethyl isocyanate, 2-(2-metacryloyloxyethyloxy) ethyl isocyanate.

Said polymer (P_{P}) or said composition (C^{POL}) is advantageously used as an additive in a composition for anti-smudge coating.

Alternatively, said polymer (P_{P}) or said composition (C^{POL}) can be provided in admixture with a suitable solvent and then used as an additive in a composition for anti-smudge coating. Said solvent is preferably a solvent capable of reacting with said polymer (P_{P}) or composition (C^{POL}).

In a further aspect, the present invention relates to a composition [composition (DIL)] comprising at least one polymer (P_{P}) or composition (C^{POL}) as defined above and at least one solvent (S), preferably selected from (per)fluoropolyether polymers having at the chain ends thereof at least one functional group, preferably selected from: unsaturated group, alkoxysilane group or epoxy group.

Preferably, composition (DIL) comprises from 0.01 to 50.00 wt.%, preferably from 1.00 to 25.00 wt.% of composition (C^{POL}) or polymer (P_{P}) and from 50.00 to 99.99 wt.%, preferably 75.00 to 99.00 wt.% of at least one solvent (S) as defined above, the amounts being based on the total weight of composition (DIL).

According to an embodiment, when polymer (P_{P}) comprises group (Si), said solvent (S) is selected from at least one hydrofluoroether or (per)fluoropolyether polymer(s) containing one silane group.

According to a preferred embodiment, when polymer (P_{P}) comprises group (U), said solvent (S) is selected from (per)fluoropolyether polymers having at the chain ends thereof at least one, more preferably at least two, unsaturated group(s).

According to a preferred embodiment, when polymer (P_{P}) comprises group (U), said composition (DIL) is advantageously added to a composition comprising at least one UV-curable component, to provide a composition [composition (C_{F})] comprising at least one polymer (P_{P}), at least one solvent (S) as defined above and at least one UV-curable component, such that the amount of said polymer (P_{P}) in said composition (C_{F}) is from 0.01 to 8.00 wt.%, more preferably from 0.50 to 5.00 wt.%, based on the total weight of said composition (C_{F}).

Preferably, composition (C_{F}) according to the present invention can be advantageously prepared by contacting composition (DIL) as defined above with said composition comprising at least one UV-curable component and optionally mixing.

At least one further ingredient may be added to the above mentioned compositions depending on the final intended use.

Such at least one further ingredient is preferably selected from: crosslinkers, transparent fillers, photo-initiators, volatile or non-volatile additives, for example selected from binders, catalysts, levelling agents, wetting agents, anti cratering agents, dyes, rheology control agents, antioxidants and/or light stabilisers.

Suitable cross-linker agents are selected for example from transesterification cross-linking agents, amino resin cross-linking agents, such as melamine-formaldehyde resins; tris alkoxycarbonyl amino triazine cross-linking agents, and the like.

Suitable transparent fillers are selected for example from silica, more preferably nano-silica.

Each of said additional ingredients and additives is preferably used in conventional amounts, such as for example in an amount up to 8.00 wt.%, more preferably from 0.01 to 5.00 wt.% based on the total weight of composition (C_{F}).

In a further aspect, the present invention relates to the use of said polymer (P_{P}), composition (C^{POL}), composition (DIL) or composition (C_{F}) as defined above, for providing a transparent coating onto at least one surface of at least a substrate.

Composition (DIL) or composition (C_{F}) can be applied to at least a surface of a suitable substrate to form a clear (i.e. transparent) coating layer.

In still a further aspect, the present invention relates to a method for providing a transparent coating onto at least a surface of a substrate, said method comprising:
(i) providing at least one glass substrate having at least one surface; and
(ii) contacting said at least one surface with at least one of composition (DIL) or composition (C_{F}) as defined above.

The way and conditions suitable to contact said compositions to said substrate can be selected from the person skilled in the art, depending on the composition and the substrate used.

For example, said step (ii) of contacting can be performed by spraying said composition (DIL) or said composition (C_{F}) onto at least a surface of a suitable surface so as to provide a film.

More preferably, when composition (DIL) or composition (C_{F}) comprises at least polymer (P_{P}) comprising a group (Si) at one chain end, the coating has a thickness below 1 µm, even more preferably from 10 to 50 nm.

More preferably, when composition (DIL) or composition (C_{F}) comprises at least polymer (P_{P}) comprising a group (U) or a group (E) at one chain end, the coating has a thickness from 20 to 500 µm, even more preferably from 30 to 250 µm.

Preferably, when composition (DIL) or composition (C_{F}) comprises at least polymer (P_{P}) comprising a group (U) at one chain end, a step (iii) of UV-curing said composition (DIL) or composition (C_{F}) is performed.

The curing conditions can be selected by the person skilled in the art based on the ingredients of said composition (DIL) or composition (C_{F}) and from the circumstances under which the coating and curing process are carried out.

Any source of radiation can be used. The radiation dose can be adjusted by the skilled persons based on the composition (DIL) or (C_{F}) used. Good results have been obtained by applying a radiation of from 200 to 750W. Preferably, when said step of curing is performed using UV, the curing time is from 1 to 50 seconds, more preferably from 5 to 30 seconds.

The invention will be hereinafter illustrated in greater detail by means of the Examples contained in the following Experimental Section; the Examples are merely illustrative and are by no means to be interpreted as limiting the scope of the invention.

### Experimental section

### Materials and methods

Fluorolink^{®} E10H and Fomblin^{®} Z DOL were obtained from Solvay Specialty Polymers Italy S.p.A.

Bis(trifluoromethyl)benzene, triethylamine, methanesulfonyl chloride, acid chloride (37% sol), potassium hydroxide, ethanol, methanol 2,6-di-tert-butyl-4-methylphenol (BHT), 2-isocyanatoethyl methacrylate, 4-amino-2,2,6,6-tetramethylpiperidine, methyl chloroacetate and sodium methoxide solution in methanol (25 wt.%), dibutyltin dilaurate, ethyl methyl ketone, potassium tert-butoxide, tert-butanol epibromohydrin were obtained from Aldrich.

3-(trimethoxysilyl)propyl isocyanate was obtained by TCI. SnapCure^{™} 1030 was obtained from Alfa Aesar Gmbh &Co.

¹H-NMR and ¹⁹F-NMR were recorded on an Agilent System 500 operating at 499.86 MHz for ¹H and 470.30 MHz for ¹⁹F.

FT-IR spectra were measured with a ThermoScientific FTIR spectrophotometer on liquid samples as thin films on KBr. Spectra were acquired by co-adding 256 scans with a resolution of 2 cm ⁻¹.

### Example 1 - Synthesis of Composition A

**Step 1:** A 4-necked round bottom flask with 0.5 L capacity, kept under nitrogen atmosphere and equipped with a condenser, a mechanical stirrer, a thermometer probe and a dropping funnel, was charged with 150 g (EW = 908 g/mol; 165.2 meq) of Fluorolink^{®} E10H, 100 g of 1,3-bis(trifluoromethyl)benzene and 6,0 g triethylamine (59.4 meq). Thereafter, the flask was refrigerated and 5.8 g of methanesulfonyl chloride (50.1 meq) were added at such a rate as to keep the temperature in the range of 15 - 30°C. When the methanesulfonyl chloride addition was complete, the reaction-mixture was let under stirring at 25-30°C for further 6 hours. 70 g of a 4M aqueous solution of HCl were then added into the reaction mixture and the thereby formed organic phase was separated. After distillation of the fluorinated solvent under reduced pressure (T= 80°C, P= 2Pa), 151.9 g of a limpid liquid were isolated and characterised. ¹H-NMR analysis confirmed that the obtained product was the starting Fluorolink^{®} E10H with 29% of the -OH groups converted into mesylate esters.

**Step 2:** 30 g of 1,3- bis(trifluoromethyl)benzene, 15 g of ethanol, 100 g of the product obtained in Step 1 and 11,5 g of 4-amino-2,2,6,6-tetramethyl piperidine (73.6 mmol) were charged into a 4-necked round bottom flask of 0.5 L capacity, kept under nitrogen atmosphere and equipped with a condenser, a mechanical stirrer, a thermometer probe and a dropping funnel. The resulting mixture was heated up to 70° and after 20 hours of vigorous stirring was cooled down to room temperature, added with 100 g of potassium hydroxide solution in ethanol (10 wt.%) and 50 g of 1,3-bis(trifluoromethyl)benzene. After 3 hours of stirring, the reaction mass was added with 100 g of water and the thereby formed organic phase was separated and submitted 3 times to additional washing by treatment with 100 g of water and 50 g of ethanol. Eventually, the lower organic phase was separated and distilled under reduced pressure (T= 80°C, P= 2Pa) to remove the solvent provided 103.5 g of the target PFPE-amine derivative, whose structure was confirmed by ¹H NMR analysis.

**Step 3:** A 4-necked round bottom flask of 100 ml capacity, equipped with a condenser, a mechanical stirrer a dropping funnel and a thermometer probe, was charged with 90 g of the product obtained in Step 2, 3,5*10⁻² g of 2,6-di-tert-butyl-4-methylphenol (BHT), 8.6*10⁻² g of SnapCure^{™} 1030 and the obtained mixture was heated up to 50°C.

10.8 g of 2-isocyanatoethyl methacrylate (69.4 mmol) were then slowly added, the temperature was raised up to 60 °C and the reaction mixture was left under vigorous stirring for 3 hours. Thereafter, 1.0 g of methanol were added, the reaction mixture was stirred for further 2 hours and dried under reduced pressure (T= 60°C, P= 2Pa) obtaining 98,1 g of Composition A.

### Example 2 - Synthesis of Composition B

**Step 1:** A 4-necked round bottom flask with 0,5 L capacity, kept under nitrogen atmosphere and equipped with a condenser, a mechanical stirrer, a thermometer probe and a dropping funnel, was charged with 250 g (EW = g/mol 871; 287,0 meq) of Fomblin^{®} ZDOL, 125 g of 1,3-bis(trifluoromethyl)benzene and 18.7 g of sodium methoxide solution in methanol (25 wt.%). The flask was then heated up at 60 °C and left under stirring for 1 hours under nitrogen and a mild nitrogen flow. Thereafter 9.7 g of methyl chloroacetate (89,0 meq) were added and the reaction-mixture was left under stirring for further 4 hours.

100 g of a 4M aqueous solution of HCl, and 10 g of methanol were then added into the reaction mixture and the thereby formed organic phase was separated. After distillation of the fluorinated solvent under reduced pressure (T= 80°C, P= 2Pa), 253,9 g of a limpid liquid were isolated and characterised.

¹H-NMR and ¹⁹F-NMR analyses confirmed that the obtained product was the starting Fomblin^{®} ZDOL, with 29% of the methylol groups converted into the corresponding methylenoxy methylacetate.

**Step 2:** A 4-necked round bottom flask of 0.25 L capacity, kept under nitrogen atmosphere and equipped with a condenser, a mechanical stirrer, a thermometer probe and a dropping funnel, was charged with 40 g of 1,3-bis(trifluoromethyl)benzene, 4-amino-2,2,6,6-tetramethylpiperidine 11.0 g ( 70.0 mmol) 150 g of the product obtained in Step 1. The resulting mixture was heated up to 70° and left under vigorous stirring for 36 hours. Distillation under reduced pressure (T= 80°C, P= 2Pa) to remove the solvent and the excess of 4-amino-2,2,6,6-tetramethylpiperidine provided 154.8 g of a limpid liquid that was characterised.

¹H NMR and FT-IR analyses confirmed the quantitative conversion of the methyl ester into the target amide.

**Step 3:** A 4-necked round bottom flask of 100 ml capacity, equipped with a condenser, a mechanical stirrer a dropping funnel and a thermometer probe, was charged with 100 g of the product obtained in Step 2, 3,9*10⁻² g of 2,6-di-tert-butyl-4-methylphenol (BHT), 9,7*10⁻² g of SnapCure^{™} 1030 and the obtained mixture was heated up to 50°C.

12.3 g of 2-isocyanatoethyl methacrylate (79.1 meq) were then slowly added, the temperature was raised up to 60 °C and the reaction mixture was left under vigorous stirring for 3 hours. Thereafter, 1.2 g of methanol were added, the reaction mixture was stirred for further 2 hours and dried under reduced pressure (T = 60°C, P = 2Pa) obtaining 110.7 g of Composition B.

### Example 3 - Synthesis of Composition C

A 3-necked round bottom flask of 50 ml capacity, equipped with a condenser, a thermometer probe, a rubber septum and a magnetic stir, was charged with 40 g of the product obtained in Step 2 of Example 2, 6.50 g of 3-(trimethoxysylil)propyl isocyanate (31.6 mmol) and the obtained mixture was heated up to 50°C. 187 µl of DBTDL solution, 20 wt.% in ethyl methyl ketone were then added, the temperature was raised up to 60°C and the reaction was let under vigorous stirring for 3 hours. Thereafter, 0,5 g of methanol were added, the reaction mixture was stirred for further 2 hours and dried under reduced pressure (T = 60°C, P = 2Pa) obtaining 45.1 of Composition C.

### Example 4 - Synthesis of Composition D

**Step 1:** A 4-necked round bottom flask with 0,5 L capacity, kept under nitrogen atmosphere and equipped with a condenser, a mechanical stirrer, a thermometer probe and a dropping funnel, was charged with 200 g (EW = g/mol 871; 229,6 meq) of Fomblin^{®} ZDOL, 150 g of 1,3-bis(trifluoromethyl)benzene and 52,1 g of sodium methoxide solution in methanol (25 wt.%). The flask was then heated up at 60 °C and left under stirring for 1 hours under nitrogen and a mild nitrogen flow. Thereafter 26,7 g of methyl chloroacetate (245,7 meq) were added and the reaction mixture was left under stirring for further 4 hours.

150 g of a 4M aqueous solution of HCl, and 20 g of methanol were then added into the reaction mixture and the thereby formed organic phase was separated. After distillation of the fluorinated solvent under reduced pressure (T= 80°C, P= 2Pa), 211,5 g of a limpid liquid were isolated and characterised.

¹H-NMR and ¹⁹N-NMR analysis confirmed 100% conversion of the methylol groups into the corresponding methylenoxy methylacetate.

**Step 2:** A 4-necked round bottom flask of 0.25 L capacity, kept under nitrogen atmosphere and equipped with a condenser, a mechanical stirrer, a thermometer probe and a dropping funnel, was charged with 60 g of 1,3-bis(trifluoromethyl)benzene, 4-amino-2,2,6,6-tetramethylpiperidine 7,7 g ( 49,3 mmol) and 150 g of the product obtained in Step 1. The resulting mixture was heated up to 70° and left under vigorous stirring for 36 hours. Distillation under reduced pressure (T= 80°C, P= 2Pa) to remove the solvent provided 152,1 g of a limpid liquid that was characterised. ¹H NMR confirmed 30% conversion of the methyl ester group into the target amide.

**Step 3:** A 4-necked round bottom flask of 0.25 L capacity, kept under nitrogen atmosphere and equipped with a condenser, a mechanical stirrer, a thermometer probe, was charged with 100 g of 1,3-bis(trifluoromethyl)benzene, 50 g of the product obtained in Example 4 Step 2 and oxirane-2-amine 2,4 g (40,8 mmol). The resulting mixture was heated up to 65° and left under vigorous stirring for 35 hours. Distillation under reduced pressure (T= 80°C, P= 2Pa) to remove the solvent provided 50,2 g of Composition D.

### Test A - evaluation of UV resistance

A composition (A) was prepared by mixing 90 wt.% of Fluorolink(R) MD700 and 10 wt.% of Composition B according to the present invention prepared as described in example 2.

Composition (B) comprising 100 wt.% of Fluorolink^{®} MD700 were used as comparison.

Specimens were coated with the composition (A) according to the present invention and with the composition (B) of comparison and then exposed to UV rays for 300 hours (QUV test exposure). After this time, the coatings were visually inspected and gloss was measured (ASTM D2457-60°) after the QUV test exposure with the following settings:
UVB: 310nm;
Irradiance 0.63W/m²;
water shower time 3 min/hour;
dark board temperature 63°C.

The coatings obtained with composition (A) according to the present invention appeared homogeneous, while the coatings obtained with composition (B) of comparison presented a few damaged areas with gloss below 100.

## Claims

1. A (per)fluoropolyether polymer [polymer (P_{P})] comprising a (per)fluoropolyoxyalkylene chain [chain (R_{pf})] having two chain ends bonded to opposite sides of said chain (R_{pf}),
wherein
* one of said chain ends comprises at least one, preferably from 1 to 3, group (group [I]) selected from: alkoxysilane [group (Si)] or cross-linkable group, preferably selected from unsaturated moiety [group (U)] and epoxide [group (E)];
and
* the other chain end comprises at least one, preferably from 1 to 3, group (group [II]) selected from the following optionally substituted piperidine, optionally substituted pyridine or optionally substituted pyrrole.

2. The polymer (P_{P}) according to Claim 1, wherein chain (R_{pf}) is a chain of formula
-D'-(CFX')_{z1}O(R_{f})(CFX)_{z2}-D-
wherein
z1 and z2, equal or different from each other, are equal to or higher than 1, preferably from 1 to 10, more preferably from 1 to 3;
X and X', equal or different from each other, are -F or -CF₃,
provided that when z1 and/or z2 are higher than 1, X and X' are -F;
D and D', equal or different from each other, are a sigma bond or a hydrogenated alkylene chain comprising from 1 to 6 and even more preferably from 1 to 3 carbon atoms, said alkyl chain being optionally substituted with at least one perfluoroalkyl group comprising from 1 to 3 carbon atoms;
(R_{f}) comprises, preferably consists of, repeating units R°, said repeating units being independently selected from the group consisting of:
(i) -CFXO-, wherein X is F or CF₃;
(ii) -CFXCFXO-, wherein X, equal or different at each occurrence, is F or CF₃, with the proviso that at least one of X is -F;
(iii) -CF₂CF₂CW₂O-, wherein each of W, equal or different from each other, are F, Cl, H;
(iv) -CF₂CF₂CF₂CF₂O-;
(v) -(CF₂)ⱼ-CFZ-O- wherein j is an integer from 0 to 3 and Z is a group of general formula -O-R_{(f-a)}-T, wherein R_{(f-a)} is a fluoropolyoxyalkene chain comprising a number of repeating units from 0 to 10, said recurring units being chosen among the following : -CFXO- , -CF₂CFXO-, -CF₂CF₂CF₂O-, -CF₂CF₂CF₂CF₂O-, with each of X being independently F or CF₃; and T being a C₁-C₃ perfluoroalkyl group.

3. The polymer (P_{P}) according to Claim 1 or 2, wherein group [I] is linked to chain (R_{pf}) via a linking group, wherein said linking group complies with the following formula:
*-(Rₐ)ₜ-(R_{b})ᵥ-(R_{c})ᵤ-§
wherein:
* indicates the bond to chain (R_{pf})
§ indicates the bond to group [I];
Rₐ is a poly(oxy)alkylene chain;
t is 0 or an integer from 1 to 15, preferably from 1 to 10;
v is 0 or 1;
R_{b} is a group of formula:
(R_{b}-I) -O-C(=O)-NH-(CHₕ)ₑ-
(R_{b}-II) -C(=O)-NR'-(CHₕ)_{f}-
(R_{b}-III) -O-(CH₂)_{g}-C(=O)-
wherein
e is an integer from 1 to 6,
R' is H or a linear or branched alkyl group having from 1 to 6 carbon atoms,
f is an integer from 1 to 4,
g is an integer from 1 to 4, and
each h is independently 0 or an integer equal to 1 or 2, with the proviso that when h is 0, e and f, each independently, are 1;
R_{c} is a linear or branched alkyl chain having from 1 to 12 carbon atoms, optionally comprising one or more oxygen atoms, or an optionally substituted aliphatic cycloalkyl comprising 5 or 6 members; and
u is 0 or 1.

4. The polymer (P_{P}) according to any one of the preceding Claims, wherein group [I] is group (U) and said group (U) is selected in the group consisting of:
(U-I) -O-C(=O)-CR_{H}=CH₂
(U-II) -O-C(=O)-NH-CO-CR_{H}=CH₂
(U-III) -O-C(=O)-R^{A}-CR_{H}=CH₂
wherein
R_{H} is H or a C₁-C₆ alkyl group;
R^{A} is selected from the group consisting of (R^{A}-I) and (R^{A}-II): 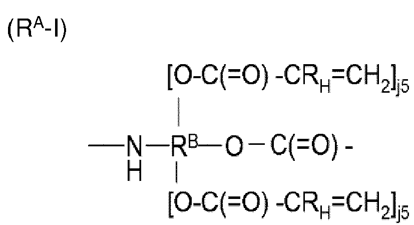
wherein
each of j5 is independently 0 or 1 and
R^{B} is a divalent, trivalent or tetravalent group selected from the group consisting of C₁-C₁₀ aliphatic group; C₃-C₁₂ cycloaliphatic group; C₅-C₁₄ aromatic or alkylaromatic group, optionally comprising at least one heteroatom selected from N, O and S; 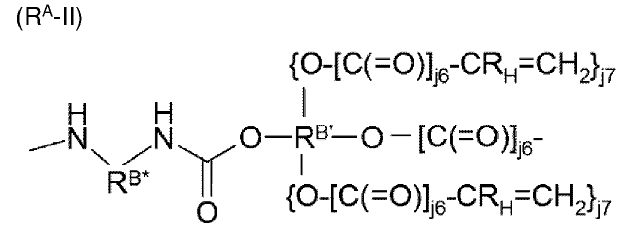
wherein
j6 is 0 or 1 ;
each of j7 is independently 0 or 1;
R^{B'} is a divalent, trivalent or tetravalent group selected from the group consisting of C₁-C₁₀ aliphatic group; C₃-C₁₂ cycloaliphatic group; C₅-C₁₄ aromatic or alkylaromatic group, optionally comprising at least one heteroatom selected from N, O and S; and
R^{B*} has the same meanings defined above for R^{B'} or it is a group of formula (R^{B}-I): 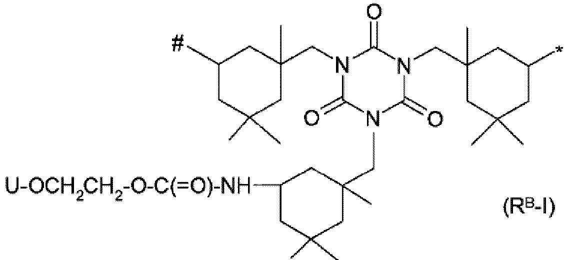
wherein
substituent U is selected from the groups (U-I) to (U-III) as defined above and
* and # indicate the bonding site to the nitrogen atoms in formula (R^{A}-II) above.

5. The polymer (P_{P}) according to any one of Claims 1 to 4, wherein group [I] is group (Si) and group (Si) complies with any of the following formulae:
-Si-(OR³⁰)₃
wherein R³⁰ is a linear or branched alkyl chain having from 1 to 12 carbon atoms;
*-(Rₐ)ₜ-(R_{c})ᵤ-§
wherein *, §, Rₐ, t, R_{c} and u have the meanings according to Claim 3.

6. The polymer (P_{P}) according to any one of the Claims 2 to 5, wherein group [II] is bonded:
- to each of group D or D' of chain (R_{pf}) via a group of formula: *-(Rₐ)ₜ-NH-§ or
*-(Rₐ)ₜ-O-§
wherein:
* indicates the bond to chain (R_{pf}) and § indicates the bond to group [II] and each of Rₐ and t have the meanings according to Claim 3
and
each of groups D and D' in chain (R_{pf}) is a hydrogenated alkylene chain comprising 1 to 6 carbon atoms; or
- to each of group D or D' of chain (R_{pf}) via a group of formula:
-(Rₐ)ₜ-(R*)ₚC(=O)NH-(R**)_{q}, or -(Rₐ)ₜ-(R***)ᵣC(=O)O-(R****)ₛ-
wherein
p, q, r and s are each independently 0 or an integer from 1 to 6,
Rₐ and t have the meanings defined above and
each of R*, R**, R*** and R**** is independently a linear or branched alkyl chain comprising from 1 to 6 carbon atoms, and
each group D and D' in chain (R_{pf}) is a sigma bond.

7. A composition [composition (C^{POL})] comprising:
- a polymer (P_{P}) according to any one of Claims 1 to 6;
- a (per)fluoropolyether polymer [polymer (P_{U})] comprising a (per)fluoropolyoxyalkylene chain [chain (R_{pf})] having two chain ends bonded to opposite sides of said chain (R_{pf}), wherein both chain ends comprise a group of formula [I] as defined above; and
- a (per)fluoropolyether polymer [polymer (P_{N})] comprising a (per)fluoropolyoxyalkylene chain [chain (R_{pf})] having two chain ends bonded to opposite sides of said chain (R_{pf}), wherein both chain ends comprise a group of formula [II] as defined above.

8. The composition (C^{POL}) according to Claim 7, said composition (C^{POL}) further comprising a (per)fluoropolyether polymer [polymer (P^{x})] comprising a (per)fluoropolyether chain [chain (R_{pf})] having two chain ends bonded to opposite sides of said chain (R_{pf}), wherein one chain end comprises a perfluoroalkyl group and the other chain end comprises either at least one group of formula [I] or of formula [II] as defined in any one of Claim 1 or Claims 4 to 6.

9. A composition [composition (INT)] comprising:
- a (per)fluoropolyether polymer [polymer (P^{INT})] comprising a (per)fluoropolyether chain [chain (R_{pf})] having two chain ends bonded to opposite sides of said chain (R_{pf}), wherein one of said chain ends comprises a group of formula -OH or -C(=O)OR¹⁰ wherein R¹⁰ is H or a linear or branched alkyl chain comprising from 1 to 6 carbon atoms and the other chain end comprises group [II] as defined in claim 1;
- a (per)fluoropolyether polymer [polymer PFPE] comprising a (per)fluoropolyether chain [chain (R_{pf})] having two chain ends bonded to opposite sides of said chain (R_{pf}), wherein both chain ends comprise a group of formula -OH or -C(=O)OR¹⁰ wherein R¹⁰ is as defined above; and
- a (per)fluoropolyether polymer [polymer (P^{II})] comprising a (per)fluoropolyether chain [chain (R_{pf})] having two chain ends bonded to opposite sides of said chain (R_{pf}), wherein both said chain ends comprise group [II] as defined in claim 1.

10. A (per)fluoropolyether polymer [polymer (P^{INT})] comprising a (per)fluoropolyether chain [chain (R_{pf})] having two chain ends bonded to opposite sides of said chain (R_{pf}), wherein one of said chain ends comprises a group of formula -OH or -C(=O)OR¹⁰ wherein R¹⁰ is H or a linear or branched alkyl chain comprising from 1 to 6 carbon atoms and the other chain end comprises group [II] as defined in claim 1.

11. A process for the synthesis of composition (INT) according to Claim 9, said process comprising:
(i) providing a (per)fluoropolyether polymer [polymer PFPE] comprising a (per)fluoropolyether chain [chain (R_{pf})] having two chain ends bonded to opposite sides of said chain (R_{pf}), both said chain ends comprising a groups selected from: -OH or -C(=O)OR¹⁰ wherein R¹⁰ is H or a linear or branched alkyl chain comprising from 1 to 6 carbon atoms;
(ii) if present, converting at least a part of said groups -OH into a leaving group for a nucleophilic substitution reaction or into a group of formula - O(R***)ᵣC(=O)O-(R^{V}) wherein R*** and r are as defined above, R^{V} is an alkyl chain comprising from 1 to 3 carbon atoms;
(iii) contacting the PFPE polymer of step (i) or the composition obtained in step (ii) with at least one compound comprising a group of formula -OH or -NH₂ and a group derived from one of the following: an optionally substituted piperidine, an optionally substituted pyridine or an optionally substituted pyrrole , thus obtaining a composition [composition (INT)].

12. A process for the synthesis of composition (C^{POL}) of Claim 7 or 8, said process comprising:
(iv) providing said composition (INT) according to Claim 9 and contacting said composition (INT) with at least one compound selected from the group consisting of:
- a compound [A] bearing at least one group (U) as defined above and at least one of: halogen atom, isocyanate group, or amino group; or
- a compound [B] bearing at least one group (E) as defined above and at least one halogen atom or at least one isocyanate group; or
- a compound [C] bearing at least one group (Si) as defined above and at least one of: isocyanate group or amino group,
thus obtaining said composition (C^{POL});
or
(i*) providing a (per)fluoropolyether polymer [polymer PFPE] comprising a (per)fluoropolyether chain [chain (R_{pf})] having two chain ends bonded to opposite sides of chain (R_{pf}), both chain ends comprising a groups selected from: -OH or -C(=O)OR¹⁰ wherein R¹⁰ is H or a linear or branched alkyl chain comprising from 1 to 6 carbon atoms;
(ii*) if present, converting at least a part of said -OH groups into a leaving group for a nucleophilic substitution reaction or into a group of formula - O(R***)ᵣC(=O)O-(R_{V}) wherein R*** and r are as defined above, Rv is an alkyl chain comprising from 1 to 3 carbon atoms;
(iii*) contacting the PFPE polymer of step (i) or the composition obtained in step (ii) with at least one compound comprising a group of formula -OH or -NH₂ and a group derived from one of the following: an optionally substituted piperidine, an optionally substituted pyridine or an optionally substituted pyrrole and ,thus obtaining composition (INT); and
(iv*) contacting composition (INT) as obtained in step (iii) with at least one compound selected in the group consisting of :
- a compound [A] bearing at least one group (U) according to Claim 4 and at least one of: halogen atom, isocyanate group or amino group; or
- a compound [B] bearing at least one group (E) according to Claim 5 and at least one halogen atom or at least one isocyanate group; or
- a compound [C] bearing at least one group (Si) according to Claim 5 and at least one of: isocyanate group or amino group,
thus obtaining composition (C^{POL}).

13. A composition [composition (DIL)] comprising
at least one polymer (P_{P}) according to any one of Claims 1 to 6 or composition (C^{POL}) according to any one of Claims 7 and 8; and
at least one solvent (S), preferably selected from (per)fluoropolyether polymers having at the chain ends thereof at least one functional group selected from:
unsaturated group, alkoxysilane group or epoxy group.

14. A composition [composition (C_{F})] comprising composition (DIL) of Claim 13 comprising at least one polymer (P_{P}) comprising group (U) according to Claim 4, and
at least one UV-curable component,
such that the amount of polymer (P_{P}) in said composition (C_{F}) is from 0.01 to 8.00 wt.% based on the total weight of said composition (C_{F}).

15. A method for providing a transparent coating onto at least a surface of a substrate, said method comprising:
(i) providing at least one substrate having at least one surface; and
(ii) contacting said at least one surface with at least one selected from the group consisting of:polymer (P_{P}) of any one of Claims 1 to 6, composition (C^{POL}) of any one of Claims 7 and 8, composition (DIL) of Claim 13 or composition (C_{F}) of Claim 14.

## Patentansprüche

1. (Per) fluorpolyetherpolymer [Polymer (P_{P})] umfassend eine (Per)fluorpolyoxyalkylenkette [Kette (R_{pf}) ] mit zwei Kettenenden, die an gegenüberliegende Seiten der Kette (R_{pf}) gebunden sind,
wobei
* eines der Kettenenden wenigstens eine, vorzugsweise von 1 bis 3, Gruppe (Gruppe [I]) ausgewählt aus: Alkoxysilan [Gruppe (Si)] oder vernetzbarer Gruppe, vorzugsweise ausgewählt aus ungesättigter Einheit [Gruppe (U)] und Epoxid [Gruppe (E)], umfasst;
und
* das andere Kettenende wenigstens eine, vorzugsweise von 1 bis 3, Gruppe (Gruppe [II]) ausgewählt aus den folgenden: gegebenenfalls substituiertes Piperidin, gegebenenfalls substituiertes Pyridin oder gegebenenfalls substituiertes Pyrrol, umfasst.

2. Polymer (P_{P}) nach Anspruch 1, wobei Kette (R_{pf}) eine Kette der folgenden Formel ist
-D'-(CFX')_{z1}O(R_{f})(CFX)_{z2}-D-
wobei
z1 und z2, gleich oder voneinander verschieden, gleich oder größer als 1 sind, vorzugsweise von 1 bis 10, bevorzugter von 1 bis 3, betragen;
X und X', gleich oder voneinander verschieden, -F oder -CF₃ sind,
mit der Maßgabe, dass, wenn z1 und/oder z2 größer als 1 sind, X und X' -F sind;
D und D', gleich oder voneinander verschieden, eine Sigma-Bindung oder eine hydrierte Alkylenkette umfassend von 1 bis 6 und bevorzugter von 1 bis 3 Kohlenstoffatome sind, wobei die Alkylkette gegebenenfalls mit wenigstens einer Perfluoralkylgruppe umfassend von 1 bis 3 Kohlenstoffatome substituiert ist;
(R_{f}) Wiederholungseinheiten R° umfasst, vorzugsweise daraus besteht, wobei die Wiederholungseinheiten unabhängig ausgewählt sind aus der Gruppe bestehend aus:
(i) -CFXO-, wobei X F oder CF₃; ist;
(ii) -CFXCFXO-, wobei X, bei jedem Auftreten gleich oder verschieden, F oder CF₃; ist, mit der Maßgabe, dass wenigstens eines von X -F ist;
(iii) -CF₂CF₂CW₂O-, wobei jedes W, gleich oder voneinander verschieden, F, Cl, H ist;
(iv) -CF₂CF₂CF₂CF₂O-;
(v) -(CF₂)ⱼ-CFZ-O-, wobei j eine ganze Zahl von 0 bis 3 ist und Z eine Gruppe der allgemeinen Formel -O-R_{(f-a)}-T ist, wobei R_{(f-a)} eine Fluorpolyoxyalkenkette mit einer Anzahl von Wiederholungseinheiten von 0 bis 10 ist, wobei die Wiederholungseinheiten ausgewählt sind aus den Folgenden: -CFXO-, -CF₂CFXO-, -CF₂CF₂CF₂O-, -CF₂CF₂CF₂CF₂O-, wobei jedes X unabhängig F oder CF₃; ist und T eine C₁-C₃-Perfluoralkylgruppe ist.

3. Polymer (P_{P}) nach Anspruch 1 oder 2, wobei Gruppe [I] über eine Verknüpfungsgruppe mit Kette (R_{pf}) verknüpft ist, wobei die Verknüpfungsgruppe der folgenden Formel entspricht:
*-(Rₐ)ₜ-(R_{b})ᵥ-(R_{c})ᵤ-§
wobei:
* die Bindung an Kette (R_{pf}) kennzeichnet;
§ die Bindung an Gruppe [I] kennzeichnet;
Rₐ eine Poly(oxy)alkylenkette ist;
t 0 oder eine ganze Zahl von 1 bis 15, vorzugsweise von 1 bis 10, ist;
v 0 oder 1 ist;
R_{b} eine Gruppe der Formel ist:
(R_{b}-I) -O-C(=O)-NH-(CHₕ)ₑ-
(R_{b}-II)) -C(=O)-NR'-(CHₕ)_{f}-
(R_{b}-III) -O-(CH₂)_{g}-C(=O)-
wobei
z eine ganze Zahl von 1 bis 6 ist,
R' H oder eine lineare oder verzweigte Alkylgruppe mit von 1 bis 6 Kohlenstoffatomen ist,
f eine ganze Zahl von 1 bis 4 ist,
g eine ganze Zahl von 1 bis 4 ist, und
jedes h unabhängig 0 oder eine ganze Zahl gleich 1 oder 2 ist, mit der Maßgabe, dass, wenn h 0 ist, e und f jeweils unabhängig 1 sind;
R_{c} eine lineare oder verzweigte Alkylkette mit von 1 bis 12 Kohlenstoffatomen, gegebenenfalls umfassend ein oder mehrere Sauerstoffatome, oder ein gegebenenfalls substituiertes aliphatisches Cycloalkyl, umfassend 5 oder 6 Glieder, ist; und
u 0 oder 1 ist.

4. Polymer (P_{P}) nach einem der vorstehenden Ansprüche, wobei Gruppe [I] Gruppe (U) ist und die Gruppe (U) ausgewählt ist aus der Gruppe bestehend aus:
(U-I) -O-C(=O)-CR_{H}=CH₂
(U-II) -O-C(=O)-NH-CO-CR_{H}=CH₂
(U-III) -O-C(=O)-R^{A}-CR_{H}=CH₂
wobei
R_{H} H oder eine C₁-C₆-Alkylgruppe ist;
R^{A} ausgewählt ist aus der Gruppe bestehend aus (R^{A}-I) und (R^{A}-II) : 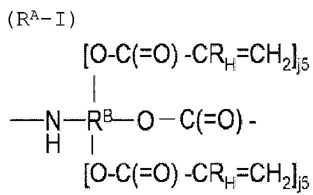
wobei
jedes von j5 unabhängig 0 oder 1 ist, und
R^{B} eine zweiwertige, dreiwertige oder vierwertige Gruppe ausgewählt aus der Gruppe bestehend aus einer aliphatischen C₁-C₁₀-Gruppe; einer cycloaliphatischen C₃-C₁₂-Gruppe; einer aromatischen oder alkylaromatischen C₅-C₁₄-Gruppe, gegebenenfalls umfassend wenigstens ein Heteroatom ausgewählt aus N, O und S, ist; 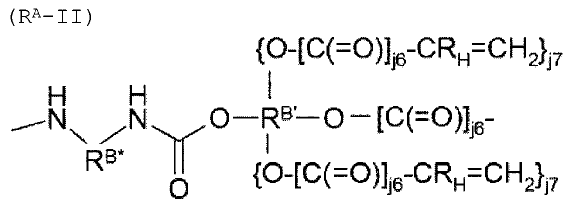
wobei
j6 0 oder 1 ist;
jedes von j7 unabhängig 0 oder 1 ist;
R^{B'} eine zweiwertige, dreiwertige oder vierwertige Gruppe ausgewählt aus der Gruppe bestehend aus einer aliphatischen C₁-C₁₀-Gruppe; einer cycloaliphatischen C₃-C₁₂-Gruppe; einer aromatischen oder alkylaromatischen C₅-C₁₄-Gruppe, gegebenenfalls umfassend wenigstens ein Heteroatom ausgewählt aus N, O und S, ist; und
R^{B*} die gleichen Bedeutungen wie vorstehend für R^{B'} definiert hat oder eine Gruppe der Formel (R^{B}-I) ist: 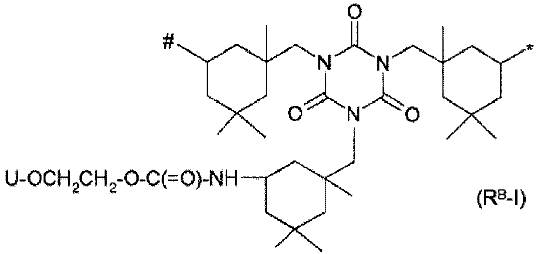
wobei
Substituent U ausgewählt ist aus den wie vorstehend definierten Gruppen (U-I) bis (U-III), und
* und # die Bindungsstelle an die Stickstoffatome in der vorstehenden Formel (R^{A}-II) kennzeichnen.

5. Polymer (P_{P}) nach einem der Ansprüche 1 bis 4, wobei Gruppe [I] Gruppe (Si) ist und Gruppe (Si) einer der folgenden Formeln entspricht:
-Si-(OR³⁰)₃
wobei R³⁰ eine lineare oder verzweigte Alkylkette mit von 1 bis 12 Kohlenstoffatomen ist;
*-(Rₐ)ₜ-(R_{c})ᵤ-§
wobei *, §, Rₐ, t, R_{c} und u die Bedeutungen nach Anspruch 3 haben.

6. Polymer (P_{P}) nach einem der Ansprüche 2 bis 5, wobei Gruppe [II] gebunden ist:
- an jede der Gruppen D oder D' von Kette (R_{pf}) über eine Gruppe der Formel: *-(Rₐ)ₜ-NH-§ oder *-(Rₐ)ₜ-O-§
wobei:
* die Bindung an Kette (R_{pf}) kennzeichnet und § die Bindung an Gruppe [II] kennzeichnet und jedes von Rₐ und t die Bedeutung nach Anspruch 3 haben,
und
jede der Gruppen D und D' in Kette (R_{pf}) eine hydrierte Alkylenkette umfassend 1 bis 6 Kohlenstoffatome ist; oder
- an jede der Gruppen D oder D' von Kette (R_{pf}) über eine Gruppe der Formel:
- (Rₐ)ₜ-(R*)ₚC(=O)NH-(R^{H})_{q} oder -(Rₐ)ₜ-(R***)ᵣC(=O)O-(R****)ₛ-
wobei
p, q, r und s jeweils unabhängig 0 oder eine ganze Zahl von 1 bis 6 sind,
Rₐ und t die vorstehend definierten Bedeutungen haben, und
jedes von R*, R**, R*** und R**** unabhängig eine lineare oder verzweigte Alkylkette umfassend von 1 bis 6 Kohlenstoffatome ist, und
jede Gruppe D und D' in Kette (R_{pf}) eine Sigma-Bindung ist.

7. Zusammensetzung [Zusammensetzung (C^{POL})] umfassend:
- ein Polymer (P) nach einem der Ansprüche 1 bis 6;
- ein (Per)fluorpolyetherpolymer [Polymer (P_{U})] umfassend eine (Per)fluorpolyoxyalkylenkette [Kette (R_{pf})] mit zwei Kettenenden, die an gegenüberliegende Seiten der Kette (R_{pf}) gebunden sind, wobei beide Kettenenden eine Gruppe der wie vorstehend definierten Formel [I] umfassen; und
- ein (Per)fluorpolyetherpolymer [Polymer (P_{N})] umfassend eine (Per)fluorpolyoxyalkylenkette [Kette (R_{pf})] mit zwei Kettenenden, die an gegenüberliegende Seiten der Kette (R_{pf}) gebunden sind, wobei beide Kettenenden eine Gruppe der wie vorstehend definierten Formel [II] umfassen.

8. Zusammensetzung (C^{POL}) nach Anspruch 7, wobei die Zusammensetzung (C^{POL}) ferner ein (Per)fluorpolyetherpolymer [Polymer (P^{x})] umfasst, das eine (Per)fluorpolyetherkette [Kette (R_{pf})] mit zwei Kettenenden umfasst, die an gegenüberliegende Seiten der Kette (R_{pf}) gebunden sind, wobei ein Kettenende eine Perfluoralkylgruppe umfasst und das andere Kettenende wenigstens eine Gruppe der Formel [I] oder der Formel [II], wie in einem der Ansprüche 1 oder 4 bis 6 definiert, umfasst.

9. Zusammensetzung [Zusammensetzung (INT)] umfassend:
- ein (Per)fluorpolyetherpolymer [Polymer (P^{INT})] umfassend eine (Per)fluorpolyetherkette [Kette (R_{pf})] mit zwei Kettenenden, die an gegenüberliegende Seiten der Kette (R_{pf}) gebunden sind, wobei eines der Kettenenden eine Gruppe der Formel -OH oder -C(=O)OR¹⁰ umfasst, wobei R¹⁰ H oder eine lineare oder verzweigte Alkylkette umfassend von 1 bis 6 Kohlenstoffatome ist, und das andere Kettenende Gruppe [II], wie in Anspruch 1 definiert, umfasst;
- ein (Per)fluorpolyetherpolymer [Polymer-PFPE] umfassend eine (Per)fluorpolyetherkette [Kette (R_{pf})] mit zwei Kettenenden, die an gegenüberliegende Seiten der Kette gebunden sind (R_{pf}), wobei beide Kettenenden eine Gruppe der Formel -OH oder -C(=O)OR¹⁰ umfassen, wobei R¹⁰ wie vorstehend definiert ist; und
- ein (Per)fluorpolyetherpolymer [Polymer (P^{II})] umfassend eine (Per)fluorpolyetherkette [Kette (R_{pf})] mit zwei Kettenenden, die an gegenüberliegende Seiten der Kette (R_{pf}) gebunden sind, wobei beide Kettenenden die Gruppe [II], wie in Anspruch 1 definiert, umfassen.

10. (Per)fluorpolyetherpolymer [Polymer (P^{INT})] umfassend eine (Per)fluorpolyetherkette [Kette (R_{pf})] mit zwei Kettenenden, die an gegenüberliegende Seiten der Kette (R_{pf}) gebunden sind, wobei eines der Kettenenden eine Gruppe der Formel -OH oder -C(=O)OR¹⁰ umfasst, wobei R¹⁰ H oder eine lineare oder verzweigte Alkylkette umfassend von 1 bis 6 Kohlenstoffatome ist, und das andere Ende Gruppe [II], wie in Anspruch 1 definiert, umfasst.

11. Verfahren zur Synthese von Zusammensetzung (INT) nach Anspruch 9, wobei das Verfahren umfasst:
(i) Bereitstellen eines (Per)fluorpolyetherpolymers [Polymer PFPE] umfassend eine (Per)fluorpolyetherkette [Kette (R_{pf})] mit zwei Kettenenden, die an gegenüberliegende Seiten der Kette (R_{pf}) gebunden sind, wobei beide Kettenenden eine Gruppe umfassen, die ausgewählt ist aus: -OH oder -C(=O)OR¹⁰, wobei R¹⁰ H oder eine lineare oder verzweigte Alkylkette umfassend von 1 bis 6 Kohlenstoffatome ist;
(ii) falls vorhanden, Umwandeln wenigstens eines Teils der Gruppen -OH in eine Abgangsgruppe für eine nukleophile Substitutionsreaktion oder in eine Gruppe der Formel -O(R***)ᵣC(=O)O-(R^{V}), wobei R*** und r wie vorstehend definiert sind, R^{V} eine Alkylkette umfassend von 1 bis 3 Kohlenstoffatome ist;
(iii) Inkontaktbringen des PFPE-Polymers von Schritt (i) oder der bei Schritt (ii) erhaltenen Zusammensetzung mit wenigstens einer Verbindung, die eine Gruppe der Formel -OH oder -NH₂ und eine Gruppe abgeleitet von einem der folgenden: einem gegebenenfalls substituierten Piperidin, einem gegebenenfalls substituierten Pyridin oder einem gegebenenfalls substituierten Pyrrol, umfasst, um eine Zusammensetzung [Zusammensetzung (INT)] zu erhalten.

12. Verfahren zur Synthese von Zusammensetzung (C^{POL}) nach Anspruch 7 oder 8, wobei das Verfahren umfasst:
(iv) Bereitstellen der Zusammensetzung (INT) nach Anspruch 9 und Inkontaktbringen der Zusammensetzung (INT) mit wenigstens einer Verbindung ausgewählt aus der Gruppe bestehend aus:
- einer Verbindung [A], die wenigstens eine wie vorstehend definierte Gruppe (U) und wenigstens eines von: Halogenatom, Isocyanatgruppe oder Aminogruppe trägt; oder
- einer Verbindung [B], die wenigstens eine wie vorstehend definierte Gruppe (E) und wenigstens ein Halogenatom oder wenigstens eine Isocyanatgruppe trägt; oder
- einer Verbindung [C], die wenigstens eine wie vorstehend definierte Gruppe (Si) und wenigstens eines von: Isocyanatgruppe oder Aminogruppe trägt,
um die Zusammensetzung (C^{POL}) zu erhalten;
oder
(i*) Bereitstellen eines (Per)fluorpolyetherpolymers [Polymer-PFPE] umfassend eine (Per)fluorpolyetherkette [Kette (R_{pf})] mit zwei Kettenenden, die an gegenüberliegende Seiten der Kette (R_{pf}) gebunden sind, wobei beide Kettenenden eine Gruppe umfassen, die ausgewählt ist aus: -OH oder -C(=O)OR¹⁰, wobei R¹⁰ H oder eine lineare oder verzweigte Alkylkette umfassend von 1 bis 6 Kohlenstoffatome ist;
(ii*) falls vorhanden, Umwandeln wenigstens eines Teils der -OH-Gruppen in eine Abgangsgruppe für eine nukleophile Substitutionsreaktion oder in eine Gruppe der Formel -O(R***)ᵣC(=O)O-(Rv), wobei R*** und r wie vorstehend definiert sind, Rv eine Alkylkette umfassend von 1 bis 3 Kohlenstoffatomen ist;
(iii*) Inkontaktbringen des PFPE-Polymers von Schritt (i) oder der bei Schritt (ii) erhaltenen Zusammensetzung mit wenigstens einer Verbindung, die eine Gruppe der Formel -OH oder -NH₂ und eine Gruppe abgeleitet von einem der folgenden umfasst: einem gegebenenfalls substituierten Piperidin, einem gegebenenfalls substituierten Pyridin oder einem gegebenenfalls substituierten Pyrrol, um Zusammensetzung (INT) zu erhalten; und
(iv*) Inkontaktbringen von Zusammensetzung (INT), wie bei Schritt (III) erhalten, mit wenigstens einer Verbindung ausgewählt aus der Gruppe bestehend aus:
- einer Verbindung [A], die wenigstens eine Gruppe (U) nach Anspruch 4 und wenigstens eines von von: Halogenatom, Isocyanatgruppe oder Aminogruppe trägt; oder
- einer Verbindung [B], die wenigstens eine Gruppe (E) nach Anspruch 5 und wenigstens ein Halogenatom oder wenigstens eine Isocyanatgruppe trägt; oder
- einer Verbindung [C], die wenigstens eine Gruppe (Si) nach Anspruch 5 und wenigstens eines von: Isocyanatgruppe oder Aminogruppe trägt,
um Zusammensetzung (C^{POL}) zu erhalten.

13. Zusammensetzung [Zusammensetzung (DIL)] umfassend:
wenigstens ein Polymer (P_{P}) nach einem der Ansprüche 1 bis 6 oder Zusammensetzung (C^{POL}) nach einem der Ansprüche 7 und 8; und
wenigstens ein Lösungsmittel (S), vorzugsweise ausgewählt aus (Per)fluorpolyetherpolymeren, die an den Kettenenden davon wenigstens eine funktionelle Gruppe ausgewählt aus: ungesättigter Gruppe, Alkoxysilangruppe oder Epoxygruppe aufweisen.

14. Zusammensetzung [Zusammensetzung (C_{F})] umfassend Zusammensetzung (DIL) nach Anspruch 13, umfassend wenigstens ein Polymer (P_{P}), umfassend Gruppe (U) nach Anspruch 4, und
wenigstens eine UV-härtbare Komponente,
so dass die Menge an Polymer (P_{P}) in der Zusammensetzung (C_{F}) von 0,01 bis 8,00 Gew.-%, bezogen auf das Gesamtgewicht der Zusammensetzung (C_{F}), beträgt.

15. Verfahren zur Bereitstellung einer transparenten Beschichtung auf wenigstens einer Oberfläche eines Substrats, wobei das Verfahren umfasst:
(i) Bereitstellen wenigstens eines Substrats mit wenigstens einer Oberfläche; und
(ii) Inkontaktbringen der wenigstens einen Oberfläche mit wenigstens einem ausgewählt aus der Gruppe bestehend aus: Polymer (P_{P}) nach einem der Ansprüche 1 bis 6, Zusammensetzung (C^{POL}) nach einem der Ansprüche 7 und 8, Zusammensetzung (DIL) nach Anspruch 13 oder Zusammensetzung (C_{F}) nach Anspruch 14.

## Revendications

1. Polymère de (per)fluoropolyéther [polymère (P_{P})] comprenant une chaîne (per)fluoropolyoxyalkylène [chaîne (R_{pf})] ayant deux extrémités de chaîne liées à des côtés opposés de ladite chaîne (R_{pf}),
dans laquelle
* une desdites extrémités de chaîne comprend au moins un, de préférence de 1 à 3, groupe (groupe [I]) choisi parmi : alcoxysilane [groupe (Si)] ou groupe réticulable, de préférence choisi parmi un groupement insaturé [groupe (U)] et époxyde [groupe (E)] ;
et
* l'autre extrémité de chaîne comprend au moins un, de préférence de 1 à 3, groupe (groupe [II]) choisi parmi les pipéridine éventuellement substituée, pyridine éventuellement substituée ou pyrrole éventuellement substitué suivants.

2. Polymère (P_{P}) selon la revendication 1, dans lequel la chaîne (R_{pf}) est une chaîne de formule
-D'-(CFX')_{z1}O(R_{f})(CFX)_{z2}-D-
dans laquelle
z1 et z2, égaux ou différents l'un de l'autre, sont égaux ou supérieurs à 1, de préférence de 1 à 10, plus préférablement de 1 à 3 ;
X et X', égaux ou différents l'un de l'autre, sont -F ou -CF₃,
à condition que lorsque z1 et/ou z2 sont supérieurs à 1, X et X' sont -F ;
D et D', égaux ou différents l'un de l'autre, sont une liaison sigma ou une chaîne alkylène hydrogénée comprenant de 1 à 6, et de manière encore plus préférée de 1 à 3 atomes de carbone, ladite chaîne alkyle étant éventuellement substituée par au moins un groupe perfluoroalkyle comprenant de 1 à 3 atomes de carbone ;
(R_{f}) comprend, de préférence est constitué de, motifs répétitifs R°, lesdits motifs répétitifs étant indépendamment choisis dans le groupe constitué par :
(i) -CFXO-, où X est F ou CF₃ ;
(ii) -CFXCFXO-, où X, identique ou différent à chaque occurrence, est F ou CF₃, à condition qu'au moins l'un des X soit -F ;
(iii) -CF₂CF₂CW₂O-, où chaque W, identique ou différent des autres, est F, Cl, H ;
(iv) -CF₂CF₂CF₂CF₂O- ;
(v) -(CF₂)ⱼ-CFZ-O- où j est un entier de 0 à 3 et Z est un groupe de formule générale -O-R_{(f-a)}-T, où R_{(f-a)} est une chaîne fluoropolyoxyalcène comprenant un nombre de motifs répétitifs de 0 à 10, lesdits motifs répétitifs étant choisis parmi les suivants : -CFXO-, -CF₂CFXO-, -CF₂CF₂CF₂O-, -CF₂CF₂CF₂CF₂O-, chacun parmi X étant indépendamment F ou CF₃; et T étant un groupe C₁-C₃ perfluoroalkyle.

3. Polymère (P_{P}) selon la revendication 1 ou 2, dans lequel le groupe [I] est lié à la chaîne (R_{pf}) par l'intermédiaire d'un groupe de liaison, ledit groupe de liaison répondant à la formule suivante :
*-(Rₐ)ₜ-(R_{b})ᵥ-(R_{c})ᵤ-§
dans laquelle :
* indique la liaison à la chaîne (R_{pf})
§ indique la liaison au groupe [I] ;
Rₐ est une chaîne poly(oxy)alkylène ;
t est 0 ou un entier de 1 à 15, préférablement de 1 à 10 ;
v est 0 ou 1 ;
R_{b} est un groupe de formule :
(R_{b}-I) -O-C(=O)-NH-(CHₕ)ₑ-
(R_{b}-II) -C(=O)-NR'-(CHₕ)_{f}-
(R_{b}-III) -O-(CH₂)_{g}-C(=O)-
dans laquelle
e est un entier de 1 à 6,
R' est H ou un groupe alkyle linéaire ou ramifié ayant de 1 à 6 atomes de carbone,
f est un entier de 1 à 4,
g est un entier de 1 à 4, et
chaque h est indépendamment 0 ou un entier égal à 1 ou 2, à condition que lorsque h est 0, e et f, chacun indépendamment, sont 1 ;
R_{c} est une chaîne alkyle, linéaire ou ramifiée, ayant de 1 à 12 atomes de carbone, comportant éventuellement un ou plusieurs atomes d'oxygène, ou un cycloalkyle aliphatique comprenant 5 ou 6 chaînons éventuellement substitué ; et
u est 0 ou 1.

4. Polymère (P_{P}) selon l'une quelconque des revendications précédentes, le groupe [I] étant le groupe (U) et ledit groupe (U) étant choisi dans le groupe constitué par :
(U-I) -O-C(=O)-CR_{H}=CH₂
(U-II) -O-C(=O)-NH-CO-CR_{H}=CH₂
(U-III) -O-C(=O)-R^{A}-CR_{H}=CH₂
dans lequel
R_{H} est H ou un groupe alkyle en C₁-C₆ ;
R^{A} est choisi dans le groupe constitué par (R^{A}-I) et (R^{A}-II) : 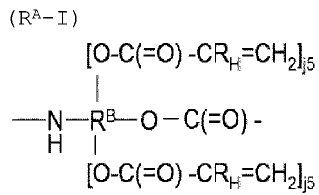
dans lequel
chacun parmi j5 est indépendamment 0 ou 1 ; et
R^{B} est un groupe divalent, trivalent ou tétravalent choisi dans le groupe constitué par un groupe aliphatique en C₁-C₁₀ ; un groupe cycloaliphatique en C₃-C₁₂ ; un groupe aromatique ou alkylaromatique en C₅-C₁₄, comprenant éventuellement au moins un hétéroatome choisi parmi N, O et S ; 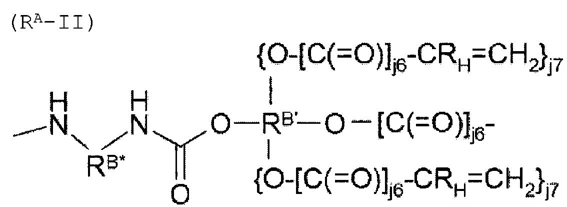
dans lequel
j6 est 0 ou 1 ;
chacun parmi j7 est indépendamment 0 ou 1 ;
R^{B'} est un groupe divalent, trivalent ou tétravalent choisi dans le groupe constitué par un groupe aliphatique en C₁-C₁₀ ; un groupe cycloaliphatique en C₃-C₁₂ ; un groupe aromatique ou alkylaromatique en C₅-C₁₄, comprenant éventuellement au moins un hétéroatome choisi parmi N, O et S ; et
R^{B*} a les mêmes significations définies ci-dessus pour R^{B'} ou est un groupe de formule (R^{B}-I) : 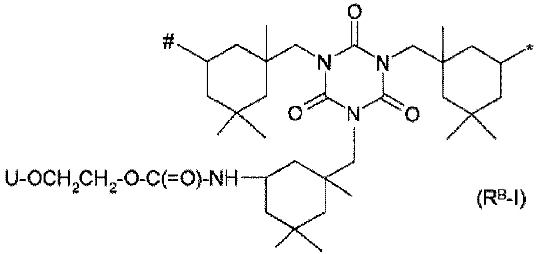
dans laquelle
un substituant U est choisi parmi les groupes (U-I) à (U-III) tels que définis ci-dessus et
* et # indiquent le site de liaison aux atomes d'azote dans la formule (R^{A}-II) ci-dessus.

5. Polymère (P_{P}) selon l'une quelconque des revendications 1 à 4, le groupe [I] étant le groupe (Si) et le groupe (Si) étant conforme à l'une quelconque des formules suivantes :
-Si-(OR³⁰)₃
dans laquelle R³⁰ est une chaîne alkyle linéaire ou ramifiée ayant de 1 à 12 atomes de carbone ;
*-(Rₐ)ₜ-(R_{c})ᵤ-§
dans laquelle *, §, Rₐ, t, R_{c} et u ont les significations selon la revendication 3.

6. Polymère (P_{P}) selon l'une quelconque des revendications 2 à 5, dans lequel le groupe [II] est lié :
- à chacun du groupe D ou D' de la chaîne (R_{pf}) par un groupe de formule : *-(Rₐ)ₜ-NH-§ où *-(Rₐ)ₜ-O-§ dans laquelle :
* indique la liaison à la chaîne (R_{pf}) et § indique la liaison au groupe [II] et chacun parmi Rₐ et t ont les significations selon la revendication 3
et
chacun des groupes D et D' dans la chaîne (R_{pf}) sont une chaîne alkylène hydrogénée comprenant 1 à 6 atomes de carbone ;
ou
- à chacun du groupe D ou D' de la chaîne (R_{pf}) par un groupe de formule :
- (Rₐ)ₜ-(R*)ₚC(=O)NH-(R**)_{q}, ou -(Rₐ)ₜ-(R***)ᵣC(=O)O-(R****)ₛ-
dans laquelle
p, q, r et s sont chacun indépendamment 0 ou un entier de 1 à 6,
Rₐ et t ont les significations définies ci-dessus et chacun de R*, R**, R*** et R**** est indépendamment une chaîne alkyle linéaire ou ramifiée comprenant de 1 à 6 atomes de carbone, et
chaque groupe D et D' dans la chaîne (R_{pf}) est une liaison sigma.

7. Composition [composition (C^{POL})] comprenant :
- un polymère (P_{P}) selon l'une quelconque des revendications 1 à 6 ;
- un polymère (per)fluoropolyéther [polymère (P_{U})] comprenant une chaîne (per)fluoropolyoxyalkylène [chaîne (R_{pf})] ayant deux extrémités de chaîne liées à des côtés opposés de ladite chaîne (R_{pf}), dans laquelle les deux extrémités de chaîne comprennent un groupe de formule [I] telle que définie ci-dessus ; et
- un polymère (per)fluoropolyéther [polymère (P_{N})] comprenant une chaîne (per)fluoropolyoxyalkylène [chaîne (R_{pf})] ayant deux extrémités de chaîne liées à des côtés opposés de ladite chaîne (R_{pf}), dans laquelle les deux extrémités de chaîne comprennent un groupe de formule [II] telle que définie ci-dessus.

8. Composition (C^{POL}) selon la revendication 7, ladite composition (C^{POL}) comprenant en outre un polymère (per)fluoropolyéther [polymère (P^{x})] comprenant une chaîne (per)fluoropolyéther [chaîne (R_{pf})] ayant deux extrémités de chaîne liées à des côtés opposés de ladite chaîne (R_{pf}), dans laquelle une extrémité de chaîne comprend un groupe perfluoroalkyle et l'autre extrémité de chaîne comprend au moins un groupe de formule [I] ou de formule [II] telle que définie dans l'une quelconque des revendications 1 ou 4 à 6.

9. Composition [composition (INT)] comprenant :
- un polymère (per)fluoropolyéther [polymère (P^{INT})] comprenant une chaîne (per)fluoropolyéther [chaîne (R_{pf})] ayant deux extrémités de chaîne liées à des côtés opposés de ladite chaîne (R_{pf}) où l'une desdites extrémités de chaîne comprend un groupe de formule -OH où -C(=O)OR¹⁰, où R¹⁰ est H ou une chaîne alkyle linéaire ou ramifiée comprenant de 1 à 6 atomes de carbone et l'autre extrémité de chaîne comprend le groupe [II] tel que défini dans la revendication 1 ;
- un polymère (per)fluoropolyéther [polymère PFPE] comprenant une chaîne (per)fluoropolyéther [chaîne (R_{pf})] ayant deux extrémités de chaîne liées à des côtés opposés de ladite chaîne (R_{pf}), où les deux extrémités de chaîne comprennent un groupe de formule -OH où -C(=O)OR^{1a} dans laquelle R¹⁰ est tel que défini ci-dessus ; et
- un polymère (per)fluoropolyéther [polymère (P^{II})] comprenant une chaîne (per)fluoropolyéther [chaîne (R_{pf})] ayant deux extrémités de chaîne liées à des côtés opposés de ladite chaîne (R_{pf}), où les deux desdites extrémités de chaîne comprennent le groupe [II] tel que défini dans la revendication 1.

10. Polymère (per) fluoropolyéther [polymère (P^{INT})] comprenant une chaîne (per)fluoropolyéther [chaîne (R_{pf})] ayant deux extrémités de chaîne liées à des côtés opposés de ladite chaîne (R_{pf}), dans lequel l'une desdites extrémités de chaîne comprend un groupe de formule -OH où -C(=O)OR¹⁰ dans laquelle R¹⁰ est H ou une chaîne alkyle linéaire ou ramifiée comprenant de 1 à 6 atomes de carbone et l'autre extrémité de chaîne comprend le groupe [II] tel que défini dans la revendication 1.

11. Procédé de synthèse de la composition (INT) selon la revendication 9, ledit procédé comprenant :
(i) la fourniture d'un polymère (per)fluoropolyéther [polymère PFPE] comprenant une chaîne (per)fluoropolyéther [chaîne (R_{pf})] possédant deux extrémités de chaîne liées à des côtés opposés de ladite chaîne (R_{pf}), les deux desdites extrémités de chaîne comprenant un groupe choisi parmi : -OH ou -C(=O)OR¹⁰, dans lequel R¹⁰ est H ou une chaîne alkyle linéaire ou ramifiée comprenant de 1 à 6 atomes de carbone ;
(ii) s'ils sont présents, la conversion d'au moins une partie desdits groupes -OH en un groupe partant pour une réaction de substitution nucléophile ou en un groupe de formule -O(R***)ᵣC(=O)O-(R^{V}) dans laquelle R*** et r sont tels que définis ci-dessus, R^{V} est une chaîne alkyle comportant de 1 à 3 atomes de carbone ;
(iii) la mise en contact du polymère PFPE de l'étape (i) ou de la composition obtenue à l'étape (ii) avec au moins un composé comprenant un groupe de formule -OH ou -NH₂ et un groupe issu de l'un des suivants : une pipéridine éventuellement substituée, une pyridine éventuellement substituée ou un pyrrole éventuellement substitué, obtenant ainsi une composition [composition (INT)].

12. Procédé de synthèse de la composition (C^{POL}) de la revendication 7 ou 8, ledit procédé comprenant :
(iv) la fourniture de ladite composition (INT) selon la revendication 9 et la mise en contact de ladite composition (INT) avec au moins un composé sélectionné dans le groupe constitué par :
- un composé [A] porteur d'au moins un groupe (U) tel que défini ci-dessus et d'au moins l'un parmi : atome d'halogène, groupe isocyanate, ou groupe amino ; ou
- un composé [B] porteur d'au moins un groupe (E) tel que défini ci-dessus et d'au moins un atome d'halogène ou d'au moins un groupe isocyanate ; ou
- un composé [C] porteur d'au moins un groupe (Si) tel que défini ci-dessus et d'au moins l'un parmi : groupe isocyanate ou groupe amino,
obtenant ainsi ladite composition (C^{POL})
ou
(i*) la fourniture d'un polymère (per)fluoropolyéther [polymère PFPE] comprenant une chaîne (per)fluoropolyéther [chaîne (R_{pf})] possédant deux extrémités de chaîne liées à des côtés opposés de la chaîne (R_{pf}), les deux extrémités de chaîne comprenant un groupe choisi parmi : -OH ou -C(=O)OR¹⁰, dans lequel R¹⁰ est H ou une chaîne alkyle linéaire ou ramifiée comprenant de 1 à 6 atomes de carbone ;
(ii*) s'ils sont présents, la conversion d'au moins une partie desdits groupes -OH en un groupe partant pour une réaction de substitution nucléophile ou en un groupe de formule -O(R***)ᵣC(=O)O-(Rv) dans laquelle R*** et r sont tels que définis ci-dessus, Rv est une chaîne alkyle comprenant de 1 à 3 atomes de carbone ;
(iii*) la mise en contact du polymère PFPE de l'étape (i) ou de la composition obtenue à l'étape (ii) avec au moins un composé comprenant un groupe de formule -OH ou -NH₂ et un groupe dérivé de l'un des suivants : une pipéridine éventuellement substituée, une pyridine éventuellement substituée ou un pyrrole éventuellement substitué et, obtenant ainsi la composition (INT) ; et
(iv*) la mise en contact de la composition (INT) telle qu'obtenue dans l'étape (iii) avec au moins un composé choisi dans le groupe constitué par :
- un composé [A] porteur d'au moins un groupe (U) selon la revendication 4 et d'au moins l'un parmi : atome d'halogène, groupe isocyanate ou groupe amino ; ou
- un composé [B] porteur d'au moins un groupe (E) selon la revendication 5 et d'au moins un atome d'halogène ou d'au moins un groupe isocyanate ; ou
- un composé [C] porteur d'au moins un groupe (Si) selon la revendication 5 et d'au moins l'un parmi : groupe isocyanate ou groupe amino,
obtenant ainsi la composition (C^{POL}).

13. Composition [composition (DIL)] comprenant au moins un polymère (P_{P}) selon l'une quelconque des revendications 1 à 6 ou une composition (C^{POL}) selon l'une quelconque des revendications 7 et 8 ; et
au moins un solvant (S), de préférence choisi parmi les polymères (per)fluoropolyéther ayant à leurs extrémités de chaîne au moins un groupe fonctionnel choisi parmi : groupe insaturé, groupe alcoxysilane ou groupe époxy.

14. Composition [composition (C_{F})] comprenant la composition (DIL) selon la revendication 13 comprenant au moins un polymère (P_{P}) comprenant un groupe (U) selon la revendication 4, et
au moins un composant durcissable par UV,
de telle sorte que la quantité de polymère (P_{P}) dans ladite composition (C_{F}) est de 0,01 à 8,00 % en poids par rapport au poids total de ladite composition (C_{F}).

15. Procédé de fourniture d'un revêtement transparent sur au moins une surface d'un substrat, ledit procédé comprenant :
(i) la fourniture d'au moins un substrat ayant au moins une surface ; et
(ii) la mise en contact de ladite au moins une surface avec au moins un élément choisi dans le groupe constitué par : polymère (P_{P}) selon l'une quelconque des revendications 1 à 6, composition (C^{POL}) selon l'une quelconque des revendications 7 et 8, composition (DIL) selon la revendication 13 ou composition (C_{F}) selon la revendication 14.
